Europäisches Patentamt

**(19)** European Patent Office

Office européen des brevets

**(11)** Publication number : **0 349 245 B1**

**(12)** # EUROPEAN PATENT SPECIFICATION

**(45)** Date of publication of patent specification :
**16.12.92 Bulletin 92/51**

**(51)** Int. Cl.⁵ : **C04B 35/52**

**(21)** Application number : **89306475.8**

**(22)** Date of filing : **26.06.89**

**(54)** Method for the manufacture of carbon fibre reinforced materials.

**(30)** Priority : **29.06.88 JP 161889/88**

**(43)** Date of publication of application :
**03.01.90 Bulletin 90/01**

**(45)** Publication of the grant of the patent :
**16.12.92 Bulletin 92/51**

**(84)** Designated Contracting States :
**DE FR GB**

**(56)** References cited :
**GB-A- 2 163 736**
**US-A- 3 550 213**

**(73)** Proprietor : **Kanto Yakin Kogyo Kabushiki
Kaisha
2543 Shinomiya
Hiratsuka-shi Kanagawa-ken (JP)**

**(72)** Inventor : **Takahashi, Susumu
236-50 Fujizuka, Hodogaya-ku
Yokohama (JP)**
Inventor : **Yoshinaga, Hitoshi
766 Kamariyacho, Kanazawa-ku
Yokohama (JP)**
Inventor : **Zusho, Mochimasa
24-17, No. 3, Motomachi
Urawashi, Saitama-ken (JP)**

**(74)** Representative : **Lord, Hilton David et al
Marks & Clerk 57-60 Lincoln's Inn Fields
London WC2A 3LS (GB)**

Jouve, 18, rue Saint-Denis, 75001 PARIS

## Description

The present invention relates to a method of manufacturing carbon fibre reinforced compound materials by heating under pressure.

Conventional methods comprise having a great number of carbon fibres applied with, or impregnated by, binders, such as thermosetting resins, including phenol, or furan resins, and thermoplastic resins, including pitch, shaping, and heating to carbonise the binders and consequently fusing under pressure within a mould or gas atmosphere.

In such methods, particularly in the heating step carried out under pressure within a mould or gas atmosphere, the furnace employed for the heating step must be provided with specific structures to exert the necessary pressure. It is extremely difficult to exert pressure through the mould if the heating step requires the preform to be moved continuously through the furnace.

The problem is, therefore, to provide a convenient method for exerting pressure on carbon fibres shaped with binders during heat treatment.

Thus, in a first aspect, the present invention provides a method for the manufacture of carbon fibre reinforced materials comprising impregnating one or more bundles of carbon fibres with a binder and heating under pressure, characterised in that the pressure is applied via fibres wound around the bundle or bundles under tension, the fibres being thermal resistant fibres having a negative thermal coefficient of linear expansion and a high tensile strength.

In an alternative aspect of the present invention, there is provided a method for manufacturing carbon fibre reinforced compound materials wherein a number of carbon fibres applied or impregnated with binder resins are subjected to heat treatment under pressure to obtain a desired compounded configuration, characterised in that said pressure is applied to the carbon fibres by having them directly or indirectly wound up by thermal resistant fibres having a high tensile strength and a negative coefficient of linear expansion.

In the methods of the present invention, carbon fibres preliminarily shaped with binders, such as resins and pitch, are bound under pressure by having them directly or indirectly wound up under tension by carbon fibres having a high tensile strength (for example, of more than 350 GPa) and a slightly negative coefficient of linear expansion (such as, for example, -1.2 x 10$^{-6}$/°C), when they are subjected to heat treatment, and the heat treatment of the aforementioned kind of carbon fibres can effectively be performed continuously in a continuous heating furnace without having to provide complex structures and means for applying pressure to the fibres in the furnace.

Aramid fibres having about 3.0 GPa of tensile strength and about 2% of thermal shrinkage at 400°C, can also exert pressuring effects as mentioned above, when they are wound around carbon fibres impregnated with binders. It is advantageous that aramid fibres (aromatic polyamide synthetic fibres such as known by Dupont's KEVLAR ARAMID fibres) can readily be removed from resultant carbon fibre reinforced compound materials when desired, since aramid fibres are decomposed when they are heated to 600°C in air.

In the methods of the present invention, it is preferred that, when bound directly on the bundle, the thermal resistant fibres are removed after the bundle has set, preferably by further heating, or dissolution.

The present invention is further illustrated with reference to the accompanying drawings, in which:

Fig 1 is an explanatory perspective view of fibres wound around carbon fibres in accordance with the invention; and

Fig. 2 is an explanatory sectional view of carbon fibres placed in dies with fibres wound around the dies for fastening in accordance with the invention.

The invention is illustrated further with reference to the following Examples and the accompanying drawings.

### Example 1

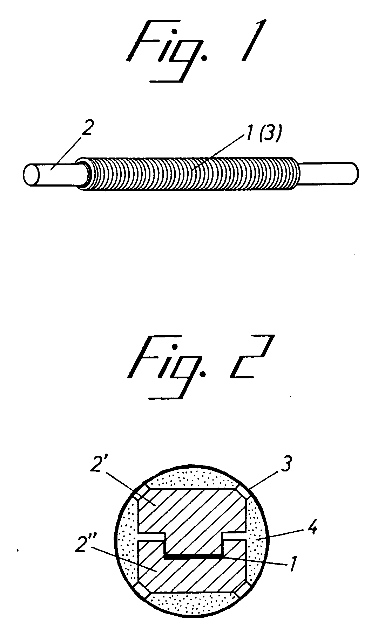

As shown in Fig. 1, around a metal bar die 2 of 10 mm in diameter, a carbon fibre bundle of 12,000 filaments, each of 7-8 μm in diameter and of 3.0 - 3.5 GPa of tensile strength, was wound up in 2 mm thickness and 300 mm length or width. The carbon fibre bundle 1 was then impregnated with a phenol resin solution containing 20 weight % of phenol resin, 10% of graphite, 70% of methanol and dried at 80°C. Carbon fibres 3 of 6-7 μm in diameter, of 350-450 GPa of tensile strength, and of -1.2 x 10$^{-6}$/°C of linear expansion coefficient were wound around the bundle, while being stretched very tightly. After the carbon fibre bundle 1 impregnated with the binder and circumferentially tightened by the fibres 3, had been shaped for 60 minutes at 250°C, the die 2 was removed. The shaped bundle was then heated to 600°C at a temperature elevation of 20°C/h, and subsequently to 1,200°C at a temperature elevation of 40°C/h , and kept at 1,200°C for 30 minutes.

The carbon fibre reinforced tubular member thus obtained had a tensile strength of 20-40 Kg/mm$^2$ in its circumferential direction, and 10-30 Kg/mm$^2$ in its axial direction. In order to judge the tensile strengths afforded to the above tubular member made in accordance with the invention, a carbon fibre bundle of a composition and dimensions exactly the same as the above-mentioned bundle 1, was impregnated with the same binder and dried at 80°C. This comparative bundle was shaped by placing it for 60 minutes at 250°C in a two-split mould kept under a pressure of 100 Kg/cm². The bundle was removed from the mould, and then heated at the same temperatures and conditions mentioned above. It had tensile strengths substantially the same as those of the tubular member of the present invention. Thus, the method of the invention can be used to provide materials having a tensile strength comparable to those produced by conventional methods with expensive machinery and controls. It was also found that the resultant tubular member has a better circumferential symmetrical appearance than the one obtained by conventional methods.

Example 2

In the Example illustrated in Fig 2, a number of carbon fibres of 7-8 μm in diameter and of 3.0-3.5 GPa of tensile strength, were mounted in a 100 mm x 100 mm x 10 mm cavity of a female die 2" so that they intersected each other at right angles and formed a sheet. This carbon fibre sheet was impregnated with a solution consisting of 20 weight% of phenol resin, 10% of graphite, and 70% of methanol, and covered by a male die 2′. A carbon fibre bundle of 6,000 filaments of 6-7 μm in diameter and of 230-240 GPa of tensile strength was wound in about 0.3 mm thickness around dies 2′ and 2″ via jigs of semi-circular cross-section, while being stretched very tightly. The dies containing the carbon fibre sheet 1 therein to be compressed under the action of heat by the carbon fibre bundle 3, were heated to 250°C and kept at this temperature for 30 minutes.

The carbon fibre sheet was then removed from the dies, and heated to 600°C at a temperature elevation of 20°C/h and subsequently to 1,200°C at a temperature elevation of 40°C/h, and kept at 1,200°C for 30 minutes. The carbon fibre reinforced compound sheet member thus obtained had a tensile strength of 15-20 Kg/mm².

For comparison, the pressing of the dies 2′, 2″ was made at 50 Kg/cm² by a press machine installed outside of a heating furnace, and were subjected to heat treatments the same as above. The resultant sheet had a tensile strength of about 20 Kg/mm², which value is similar to the sheet produced by the method of the present invention.

As the method of the invention does not require any specific external pressing apparatus, it is extremely easy to keep a heating atmosphere within a furnace as desired. Consequently, structures of furnaces for the manufacture of carbon fibre-reinforced compound materials can be simplified in accordance with the method of the present invention.

As will be apparent from the above Examples, carbon fibres can be subjected to any desired high temperature under pressure, and can be treated continuously by a continuous heating furnace, as the pressure or fastening means are closely associated or located with the carbon fibres in the method of the invention. In addition, not only do carbon fibre-reinforced compound materials manufactured in accordance with the invention have tensile strengths comparable to those made by conventional methods, but they also tend to have more accurate and uniform outer dimensions.

## Claims

1. A method for the manufacture of carbon fibre reinforced materials comprising impregnating one or more bundles of carbon fibres with a binder and heating under pressure, characterised in that the pressure is applied via fibres wound around the bundle or bundles under tension, the fibres being thermal resistant fibres having a negative thermal coefficient of linear expansion and a high tensile strength.

2. A method according to claim 1 wherein the thermal resistant fibres are wound around the bundle.

3. A method according to claim 2 wherein the thermal resistant fibres are wound around a mould containing the bundle.

4. A method according to any preceding claim, wherein the thermal resistant fibres are carbon fibres.

5. A method according to any of claims 1 to 3, wherein the thermal resistant fibres are aramid fibres.

6. A method according to any preceding claim, wherein, when bound directly on the bundle, the thermal resistant fibres are removed after the bundle has set, preferably by further heating, or dissolution.

## Patentansprüche

1. Verfahren zur Herstellung von mit Kohlenstoffasern verstärkten Materialien, das das Imprägnieren eines oder mehrerer Bündel von Kohlenstoffasern mit einem Bindemittel und das Erhitzen unter Druck umfaßt, dadurch gekennzeichnet, daß der Druck über Fasern ausgeübt wird, die unter Zugspannung um das Bündel oder die Bündel gewickelt werden, wobei die Fasern wärmebeständige Fasern sind, die einen negativen linearen Wärmeausdehnungskoeffizienten und hohe Zugfestigkeit haben.

2. Verfahren nach Anspruch 1, wobei die wärmebeständigen Fasern um das Bündel herumgewickelt werden.

3. Verfahren nach Anspruch 2, wobei die wärmebeständigen Fasern um eine Form gewickelt werden, die das Bündel enthält.

4. Verfahren nach einem der vorangehenden Ansprüche, wobei die wärmebeständigen Fasern Kohlenstoffasern sind.

5. Verfahren nach einem der Ansprüche 1 bis 3, wobei die wärmebeständigen Fasern Aramid-Fasern sind.

6. Verfahren nach einem der vorangehenden Ansprüche, wobei die wärmebeständigen Fasern, wenn sie direkt um das Bündel gewickelt werden, nach der Erhärtung des Bündels entfernt werden, vorzugsweise durch weiteres Erwärmen oder durch Auflösung.

**Revendications**

1. Procédé pour la fabrication de matériaux renforcés par des fibres en carbone, comprenant le fait d'imprégner un ou plusieurs faisceaux de fibres en carbone à l'aide d'un liant et de les chauffer sous pression, caractérisé en ce que la pression s'exerce via des fibres enroulées autour du ou des faisceaux sous tension, les fibres étant des fibres résistant à la chaleur et possédant un coefficient thermique négatif de dilatation linéaire, ainsi qu'une résistance élevée à la traction.

2. Procédé selon la revendication 1, dans lequel on enroule les fibres à résistance thermique autour du faisceau.

3. Procédé selon la revendication 2, dans lequel on enroule les fibres à résistance thermique autour d'un moule contenant le faisceau.

4. Procédé selon l'une quelconque des revendications précédentes, dans lequel les fibres à résistance thermique sont des fibres en carbone.

5. Procédé selon l'une quelconque des revendications 1 à 3, dans lequel les fibres à résistance thermique sont des fibres en aramide.

6. Procédé selon l'une quelconque des revendications précédentes, dans lequel, lorsqu'on enroule les fibres à résistance thermique directement sur le faisceau, on les retire après durcissement du faisceau, de préférence par chauffage ultérieur ou par dissolution.

# Fig. 1

2  1 (3)

# Fig. 2

2'  3

2''  4

1